# EUROPÄISCHE PATENTSCHRIFT

(11) **EP 1 554 500 B1**
(45) Veröffentlichungstag und Bekanntmachung des Hinweises auf die Patenterteilung: **15.08.2007**
(21) Anmeldenummer: 03757990.1
(22) Anmeldetag: 16.10.2003
(51) Int. Cl.: F16C 11/06

(54) **GELENKLAGER**
SPHERICAL BEARING
ARTICULATION A ROTULE

(30) Priorität: 26.10.2002 DE 10249969
(43) Veröffentlichungstag der Anmeldung: 20.07.2005
(73) Patentinhaber: Schaeffler KG, 91074 Herzogenaurach (DE)
(72) Erfinder: MAASCH, Dirk, 33803 Steinhagen (DE); HOCHMUTH, Harald, 91469 Hagenbüchach (DE); WAGNER, Jörg, 91097 Oberreichenbach (DE)
(86) Internationale Anmeldenummer: PCT/EP2003/011464
(87) Internationale Veröffentlichungsnummer: WO 2004/038238

(56) Entgegenhaltungen:
- WO-A-03/069174
- DE-A- 1 450 025
- DE-U- 1 860 860
- FR-A- 1 077 585
- US-A- 3 604 088
- US-A- 5 265 965

## Beschreibung

### Gebiet der Erfindung

Die Erfindung betrifft ein Gelenklager mit einem als durchbohrter Kugelkörper ausgebildeten Innenring, der über eine den Innenring umgebende Gleitbuchse in einem Außenring gelagert ist, welcher eine kugelförmige innere Oberfläche aufweist, wobei an dem Außenring zwei diametral gegenüberliegende, von einer seiner Stirnseiten ausgehende Einführnuten angebracht sind, die die Einführung des Innenringes ermöglichen. Aus des Offenlegungsschrift US 5265965 ist ein Gelenklager der eingangs genannten Art bekannt.

### Hintergrund der Erfindung

Bei Gelenklagern, bei denen die Kugelform im Außenring und die Kugelform an der Gleitbuchse durch Anformen mit axialer Stauchung des Außenringes gebildet werden, können bei hohem Umformgrad im Innenbereich des Außenringes Risse entstehen. Gelenklager mit einem in den Außenring eingekippten Innenring sind häufig nicht wartungsfrei und müssen daher regelmäßig nachgeschmiert werden.

Aus der Offenlegungsschrift DE 1 903 422 ist auch ein Gelenklager der eingangs genannten Art bekannt. Dort besteht der Außenring aus drei Einzelteilen, und zwar aus zwei ebenen Scheiben, die über einen Zwischenring, beispielsweise durch Schweißen oder Kleben, miteinander verbunden sind. Der Zwischenring besitzt einen Innendurchmesser, der größer ist als der Durchmesser des Kugelkörpers, der den Innenring bildet. Nach dem Einführen des Kugelkörpers in den Außenring wird der Zwischenraum zwischen dem Kugelkörper und dem Zwischenring mit einem Kunststoff ausgefüllt und auf diese Weise eine Gleitbuchse hergestellt. Dieses Gelenklager ist jedoch schon wegen der mehreren einzelnen Bauteile seines Außenringes sehr aufwendig in der Herstellung.

### Zusammenfassung der Erfindung

Der Erfindung liegt die Aufgabe zugrunde, einen einfachen und sicheren Weg anzugeben, wie ein Gelenklager mit einem zusätzlichen Gleitlagerbelag hergestellt werden kann.

Diese Aufgabe wird erfindungsgemäß dadurch gelöst, dass vor der Einführung des Innenringes in den Außenring die Gleitbuchse auf den Innenring aufgesteckt und anschließend durch ein spanloses Formgebungsverfahren an die kugelförmige äußere Oberfläche des Innenringes angelegt ist. An der Gleitbuchse sind Einprägungen zur Sicherung gegen Verdrehung angebracht sein, welche sich in die Bereiche der Einführnuten des Außenringes hinein erstrecken. Der Außenring kann aus einem Sinterstahl hergestellt sein. Auf diese Weise wird eine Rißbildung durch axiales Stauchen an dem Außenring vermieden und ein wartungsfreies Gelenklager geschaffen, welches jede beliebige Außenkontur wie Zwei-Flansch-Kontur oder Drei-Flansch-Kontur ermöglicht.

Die Gleitbuchse kann durch Rollieren oder Pressen an den kugelförmigen Innenring angelegt sein.

### Kurze Beschreibung der Zeichnung

Ein Ausführungsbeispiel der Erfindung ist in der Zeichnung dargestellt und wird im Folgenden näher beschrieben. Es zeigen:

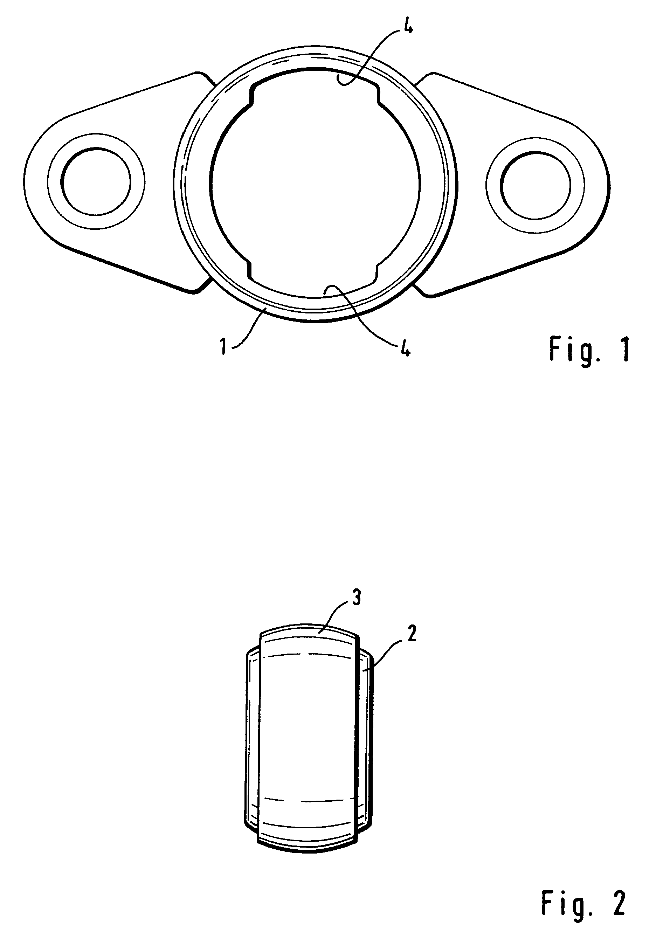

- Figur 1: einen Außenring eines erfindungsgemäßen Lagers;
- Figur 2: einen Innenring des Lagers mit einer aufgesteckten Gleitbuchse;
- Figur 3: das Lager mit dem in den Außenring eingesteckten, noch nicht verschwenkten Innenring;
- Figur 4: das fertig montierte Lager.

### Ausführliche Beschreibung der Zeichnung

Ein erfindungsgemäßes Gelenklager besteht aus einem Außenring 1, einem Innenring 2 und einer Gleitbuchse 3. Die äußere Oberfläche des Innenringes 2 ist kugelförmig ausgebildet. In entsprechender Weise ist die innere Oberfläche des Außenringes 1 mit der Form einer Kugelschale versehen. Die Gleitbuchse 3 ist auf den Innenring 2 aufgesteckt und durch ein spanloses Formgebungsverfahren an den Innenring 2 angelegt. Um diese aus dem Innenring 2 und der Gleitbuchse 3 bestehende Baueinheit in den Außenring 1 hineinstecken zu können, sind am Außenring 1 von einer seiner Stirnseiten ausgehend zwei diametral gegenüberliegende Einführnuten 4 angeordnet.

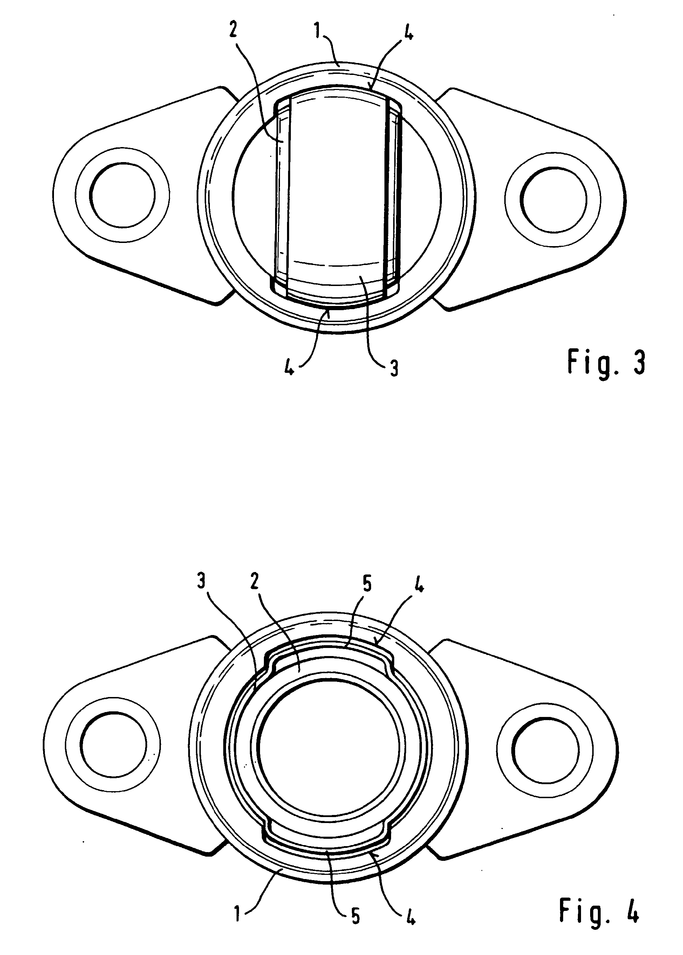

Die Gleitbuchse 3 und der Innenring 2 werden gemäß Figur 3 mit einer Umfangsstelle voran in den Außenring 1 hinein in dessen Achsrichtung bewegt und dort anschließend um 90° verschwenkt, so dass der Außenring 1, die Gleitbuchse 3 und der Innenring 2 koaxial angeordnet sind. Anschließend wird die Gleitbuchse 3 so verformt, dass sie in die beiden Einführnuten 4 des Außenringes 1 hineinragende Einprägungen 5 erhält, welche eine Verdrehung der Gleitbuchse 3 gegenüber dem Außenring 1 verhindern. Der Innenring 2 ist nun über die Gleitbuchse 3 in dem Außenring 1 drehbar und entsprechend seiner Kugelform in Grenzen verschwenkbar gelagert.

## Patentansprüche

1. Gelenklager mit einem als durchbohrter Kugelkörper ausgebildeten Innenring (2), der über eine den Innenring (2) umgebende Gleitbuchse (3) in einem Außenring (1) gelagert ist, welcher eine kugelförmige innere Oberfläche aufweist, wobei an dem Außenring (1) zwei diametral gegenüberliegende, von einer seiner Stirnseiten ausgehende Einführnuten (4) angebracht sind, die die Einführung des Innenringes (2) ermöglichen, **dadurch gekennzeichnet, dass** vor der Einführung des Innenringes (2) in den Außenring (1) die Gleitbuchse (3) auf den Innenring (2) aufgesteckt und anschließend durch ein spanloses Formgebungungsverfahren an die kugelförmige äußere Oberfläche des Innenringes (2) angelegt ist, wobei an der Gleitbuchse (3) Einprägungen (5) zur Sicherung gegen Verdrehung angebracht sind, welche sich in die Bereiche der Einführnuten (4) des Außenringes (1) hinein erstrecken.

2. Lager nach Anspruch 1, **dadurch gekennzeichnet, dass** die Gleitbuchse (3) durch Rollieren an den kugelförmigen Innenring (2) angelegt ist.

3. Lager nach Anspruch 1, **dadurch gekennzeichnet, dass** die Gleitbuchse (3) durch Pressen an den kugelförmigen Innenring (2) angelegt ist.

4. Lager nach Anspruch 1, **dadurch gekennzeichnet, dass** der Außenring (1) aus einem Sinterstahl hergestellt ist.

## Claims

1. Spherical bearing having an inner race (2) configured as a bored-through ball body, which is mounted in an outer race (1) via a slide bush (3) that encircles the inner race (2), said outer race exhibiting a spherical inner surface, in conjunction with which two diametrically opposed insertion grooves (4) which start from one of its faces are positioned on the external race (1), which grooves permit the insertion of the inner race (2), **characterized in that**, before the insertion of the inner race (2) into the outer race (1), the slide bush (3) is pushed onto the inner race (2) and is subsequently applied to the spherical outer surface of the inner race (2) by means of a non-cutting shaping method, in conjunction with which impressions (5) intended to secure against rotation are positioned on the slide bush (3), which impressions extend inwards into the areas of the insertion grooves (4) of the outer race (1).

2. Bearing according to Claim 1, **characterized in that** the slide bush (3) is applied to the spherical inner race (2) by rolling.

3. Bearing according to Claim 1, **characterized in that** the slide bush (3) is applied to the spherical inner race (2) by pressing.

4. Bearing according to Claim 1, **characterized in that** the outer race (1) is made from a sintered steel.

## Revendications

1. Articulation à rotule comportant une bague intérieure (2) en forme de corps sphérique percé, qui est montée dans une bague extérieure (1), qui présente une surface intérieure sphérique, au moyen d'un manchon de glissement (3) entourant la bague intérieure (2), dans laquelle deux rainures d'introduction diamétralement opposées (4), partant d'une de ses faces frontales, sont pratiquées sur la bague extérieure (1) et permettent l'introduction de la bague intérieure (2), **caractérisée en ce qu'**avant l'introduction de la bague intérieure (2) dans la bague extérieure (1), on engage le manchon de glissement (3) sur la bague intérieure (2) et on l'applique ensuite sur la surface extérieure sphérique de la bague intérieure (2) par un procédé de formage sans enlèvement de matière, des empreintes (5) qui s'étendent jusque dans les régions des rainures d'introduction (4) de la bague extérieure (1) étant formées sur le manchon de glissement (3) afin d'empêcher sa rotation.

2. Articulation selon la revendication 1, **caractérisée en ce que** le manchon de glissement (3) est appliqué sur la bague intérieure sphérique (2) par roulage.

3. Articulation selon la revendication 1, **caractérisée en ce que** le manchon de glissement (3) est appliqué sur la bague intérieure sphérique (2) par pressage.

4. Articulation selon la revendication 1, **caractérisée en ce que** la bague extérieure (1) est fabriquée en un acier fritté.
